# EUROPEAN PATENT APPLICATION

(11) **EP 4 664 260 A1**
(43) Date of publication of application: **17.12.2025**
(21) Application number: 25173402.6
(22) Date of filing: 29.04.2025
(51) Int. Cl.: G06F 3/0488

(54) **PROGRAM, TOUCH PANEL CONTROLLER, INFORMATION PROCESSING APPARATUS, AND METHOD FOR CONTROLLING TOUCH PANEL**

(30) Priority: 12.06.2024 JP 2024095401
(71) Applicant: FCL Components Limited, Tokyo 140-0002 (JP)
(72) Inventor: MORI, Wataru, 140-0002 Shinagawa-ku (JP); SAKAI, Toshihiko, 140-0002 Shinagawa-ku (JP); OKUDA, Tatsunori, 140-0002 Shinagawa-ku (JP); UENO, Yutaka, 140-0002 Shinagawa-ku (JP)
(74) Representative: Haseltine Lake Kempner LLP

(57) **Abstract**

There is provided a program causing a computer (2, 3) connected to a resistive touch panel (4) to execute a process. The process includes acquiring first data based on touch input of the touch panel, determining whether an input area of the touch input is equal to or larger than a threshold, converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value, and outputting the second data or the third data to an application.

## Description

### FIELD

A certain aspect of the embodiments is related to a program, a touch panel controller, an information processing apparatus, and a method for controlling a touch panel.

### BACKGROUND

There has been known a technology in which a cursor is displayed at a position corresponding to the area of the contact region where the user is in contact with a touch panel when the user is operating by touch. There has been known a technology in which a pointer is displayed when a contact area at the time of contact operation on an input surface of an input operation unit is equal to or larger than a predetermined value. There has been known a touch panel device capable of detecting a contact area independent of the position of input. Note that the technology related to the present disclosure is disclosed in International Publication Pamphlet No. WO 2010/073329, Japanese Laid-open Patent Publication No. 2009-193423 and Japanese Laid-open Patent Publication No. 2021-179799.

The touch panel is a device capable of directly indicating a position to be input, and therefore is an absolute coordinate input device in which input is determined at the time of touch. On the other hand, since a mouse or a touch pad cannot directly indicate a position to be input, the mouse or the touch pad is a relative coordinate input device in which input is determined by clicking or tapping after moving a cursor.

### SUMMARY

According to a first aspect of the present disclosure, there is provided a program causing a computer connected to a resistive touch panel to execute a process, the process comprising: acquiring first data based on touch input of the touch panel; determining whether an input area of the touch input is equal to or larger than a threshold; converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value; and outputting the second data or the third data to an application.

According to a second aspect of the present disclosure, there is provided a touch panel controller connected to a resistive touch panel, including: an acquisition unit configured to acquire first data based on touch input of the touch panel; a determination unit configured to determine whether an input area of the touch input is equal to or larger than a threshold; a conversion unit configured to convert the first data into second data for causing the touch panel to operate as an absolute coordinate input device when the input area is equal to or larger than the threshold value, and to convert the first data into third data for causing the touch panel to operate as a relative coordinate input device when the input area is smaller than the threshold value; and an output unit configured to output the second data or the third data to an application.

According to a third aspect of the present disclosure, there is provided an information processing apparatus connected to a resistive touch panel, including: an acquisition unit configured to acquire first data based on touch input of the touch panel; a determination unit configured to determine whether an input area of the touch input is equal to or larger than a threshold; a conversion unit configured to convert the first data into second data for causing the touch panel to operate as an absolute coordinate input device when the input area is equal to or larger than the threshold value, and to convert the first data into third data for causing the touch panel to operate as a relative coordinate input device when the input area is smaller than the threshold value; and an output unit configured to output the second data or the third data to an application.

According to a fourth aspect of the present disclosure, there is provided a method of controlling a resistive touch panel, including: acquiring first data based on touch input of the touch panel; determining whether an input area of the touch input is equal to or larger than a threshold; converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value; and outputting the second data or the third data to an application.

According to the present disclosure, it is possible to continuously realize a cursor movement process and an input position determination process without performing operation of switching an operation mode of the touch panel in the application.

### BRIEF DESCRIPTION OF THE DRAWINGS

FIG. 1 is a block diagram of a system including a touch panel controller and a computer according to a present embodiment.
FIG. 2A is a block diagram illustrating the configuration of the computer.
FIG. 2B is a block diagram illustrating the configuration of the touch panel controller.
FIGs. 3A to 3C are diagrams illustrating examples of data structures.
FIG. 4 is a flowchart illustrating a process of data conversion by a touch panel driver.
FIG. 5 is a flowchart illustrating a process of data conversion by the touch panel driver.
FIG. 6 is a flowchart illustrating a process of data conversion by the touch panel controller.
FIG. 7 is a flowchart illustrating a process of data conversion by the touch panel controller.
FIG. 8 is a flowchart illustrating an example of the process performed by a CPU that executes an application.
FIGs. 9A to 9C are diagrams illustrating examples of an operation screen of the applications.

### DESCRIPTION OF EMBODIMENTS

When the relative coordinate input is performed by the touch panel which is an absolute coordinate input device, the user needs to set the operation mode of the touch panel to the relative coordinate input device in an application. It is conceivable to execute the movement of the cursor in the operation mode of the relative coordinate input, and then to switch the operation mode of the touch panel from the relative coordinate input device to the absolute coordinate input device in the application, thereby determining the input position. In this case, the user must perform operation for switching the operation mode of the touch panel in the application.

The present disclosure has been made in view of the above problems, and an object thereof is to provide a program, a touch panel controller, an information processing apparatus, and a method for controlling a touch panel, which can continuously realize a cursor movement process and an input position determination process without performing operation of switching an operation mode of the touch panel in the application.

Embodiments of the present disclosure will be described below with reference to the drawings.

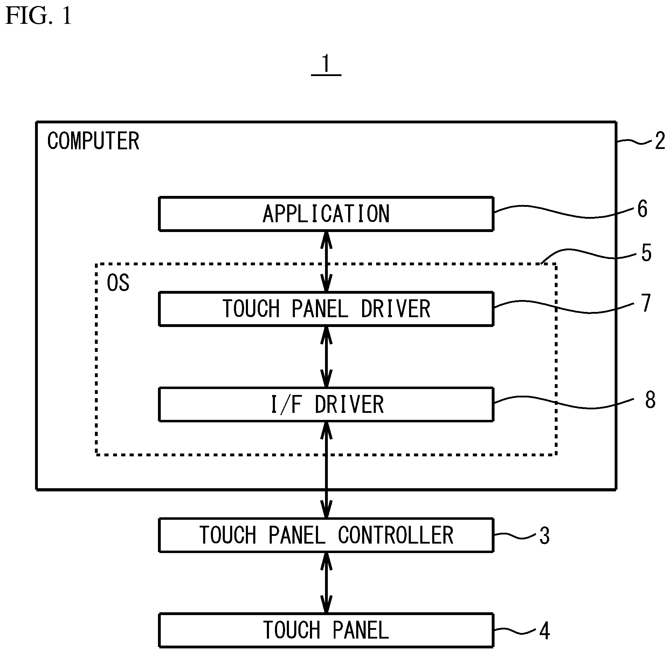

FIG. 1 is a block diagram of a system including a touch panel controller and a computer according to the present embodiment.

A system 1 includes a computer 2 as an information processing apparatus, a touch panel controller 3 connected to the computer 2, and a touch panel 4 connected to the touch panel controller 3. The computer 2 is a personal computer, a server, a smart phone, a kiosk terminal, a ticket vending machine, or the like. The touch panel 4 is a resistive touch panel.

The touch panel controller 3 is a controller for controlling the operation of the touch panel 4, and can detect a contact area between the surface of the touch panel 4 and an input member such as a finger or a pen, that is, an input area of touch input. For example, a touch panel device which is a combination of a touch panel and a touch panel controller and can detect an input area of touch input is described in Japanese Laid-open Patent Publication No. 2021-179799. If the touch panel controller 3 can detect the input area of the touch input, a touch panel controller other than the touch panel controller disclosed in Japanese Laid-open Patent Publication No. 2021-179799 may be used. The configuration of the touch panel device and the method of detecting the input area of the touch input are not limited to the configuration of the device and the detection method described in Japanese Laid-open Patent Publication No. 2021-179799.

Touch input may be performed with a member having a variable input area. For example, touch input can be performed with a jig whose input area increases or decreases in accordance with an increase or decrease in pressing force, a jig whose input area increases or decreases by switch operation, or a finger whose input area can be varied, such as a toe of a nail and a finger pad.

The computer 2 includes an operating system (OS) 5, an application 6, a touch panel driver 7, and an I/F driver 8. The application 6 is a program that runs on the OS 5. The touch panel driver 7 is a program for outputting data related to touch input such as input coordinates to the application 6. The I/F driver 8 is a program for controlling an interface connected to the touch panel controller 3.

In the present embodiment, the touch panel driver 7 or the touch panel controller 3 executes data conversion in order to switch the operation mode of the touch panel 4 to a tablet mode or a mouse mode (or a keyboard mode).

For example, a program (specifically, firmware) incorporated in the touch panel controller 3 acquires data relating to touch input such as input coordinates from the touch panel 4, converts the data relating to touch input into data processable by the application 6, and outputs the data processable by the application 6 to the application 6 via the touch panel driver 7 and the I/F driver 8. In this case, the touch panel driver 7 outputs the data processable by the application 6 to the application 6 as it is, and does not execute the data conversion.

When the touch panel driver 7 executes data conversion, the touch panel driver 7 acquires data relating to touch input such as input coordinates from the touch panel 4 via the touch panel controller 3 and the I / F driver 8, converts the data relating to touch input into data capable of being processed by the application 6, and outputs the data capable of being processed by the application 6 to the application 6. In this case, the touch panel controller 3 outputs the data related to the touch input to the touch panel driver 7 as it is, and does not execute the data conversion.

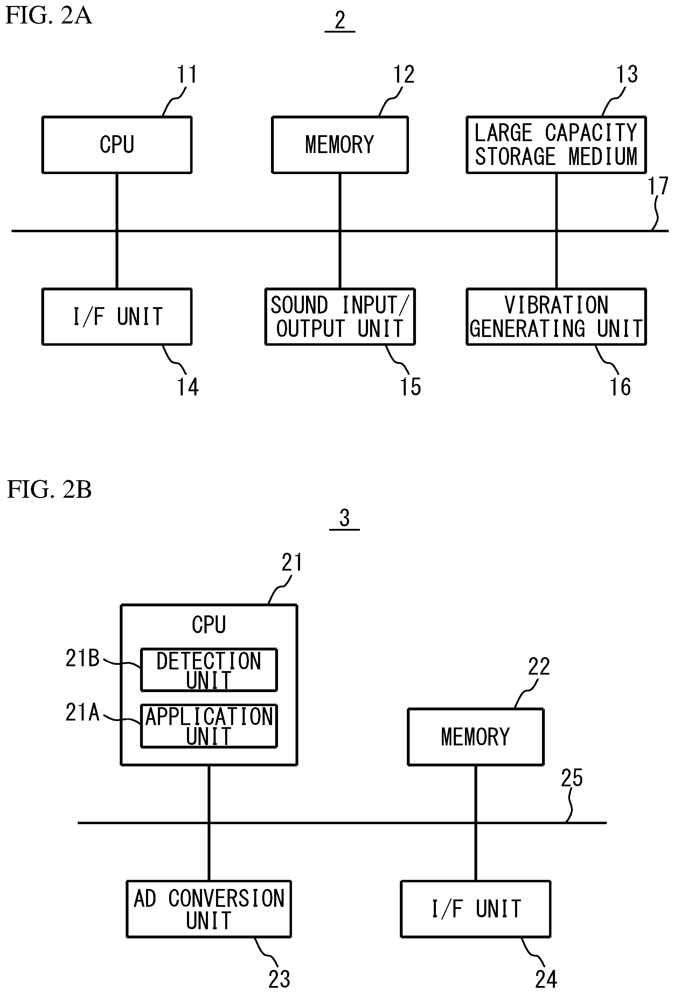

FIG. 2A is a block diagram illustrating the configuration of the computer 2, and FIG. 2B is a block diagram illustrating the configuration of the touch panel controller 3.

As illustrated in FIG. 2A, the computer 2 includes a CPU (Central Processing Unit) 11, a memory 12, a large capacity storage medium 13, an interface (I/F) unit 14, a sound input/output unit 15, and a vibration generating unit 16. The CPU 11, the memory 12, the large capacity storage medium 13, the I/F unit 14, the sound input/output unit 15, and the vibration generating unit 16 are connected to each other via a bus 17.

The CPU 11 controls the operation of the entire computer 2. The memory 12 temporarily holds data and functions as a working area for programs. The large capacity storage medium 13 is a hard disk drive (HDD) or a solid state drive (SSD). The I/F unit 14 is an interface for connection with the touch panel controller 3, and is, for example, a serial port or a USB (Universal Serial Bus) port. The program according to the present embodiment is stored in the memory 12 or the large capacity storage medium 13, and is read out and executed by the CPU 11. The sound input/output unit 15 is a microphone for inputting audio and a speaker for outputting audio. The vibration generating unit 16 is a piezoelectric element or the like that vibrates the input surface of the touch panel 4. The computer 2 need not include the sound input/output unit 15 and the vibration generating unit 16. Various processes as described later, which are executed by the touch panel driver 7, are realized by the CPU 11, and the CPU 11 functions as an acquisition unit, a determination unit, a conversion unit, and an output unit.

As illustrated in FIG. 2B, the touch panel controller 3 includes a CPU 21, a memory 22, an AD conversion unit 23, and an I/F unit 24. The CPU 21, the memory 22, the AD conversion unit 23, and the I/F unit 24 are connected to each other via a bus 25.

The CPU 21 controls the operation of the entire touch panel controller 3. The memory 22 holds data and programs, and functions as a working area for the programs. The AD conversion unit 23 reads a voltage value at the time of touch input and converts the voltage value into digital data. The I/F unit 24 is an interface for connection with the computer 2, and is, for example, a serial port or a USB port.

The CPU 21 functions as an application unit 21A and a detection unit 21B. The application unit 21A controls voltage application to each of the plurality of electrodes provided in the touch panel 4. The detecting unit 21B acquires voltage values related to the plurality of electrodes measured by the AD converting unit 23, and detects an input area, input coordinates, and the like of the touch input based on these voltage values.

For example, the CPU 21, the memory 22, and the AD conversion unit 23 may be configured by a single IC (Integrated Circuit) chip. Instead of the CPU 21, an ASIC (Application Specific Integrated Circuit) or an FPGA (Field Programmable Gate Array) may be used. The program according to the present embodiment is stored in the memory 22, and is read out and executed by the CPU 21. Various processes as described later, which are executed by the touch panel controller 3, are realized by the CPU 21, and the CPU 21 functions as an acquisition unit, a determination unit, a conversion unit, and an output unit.

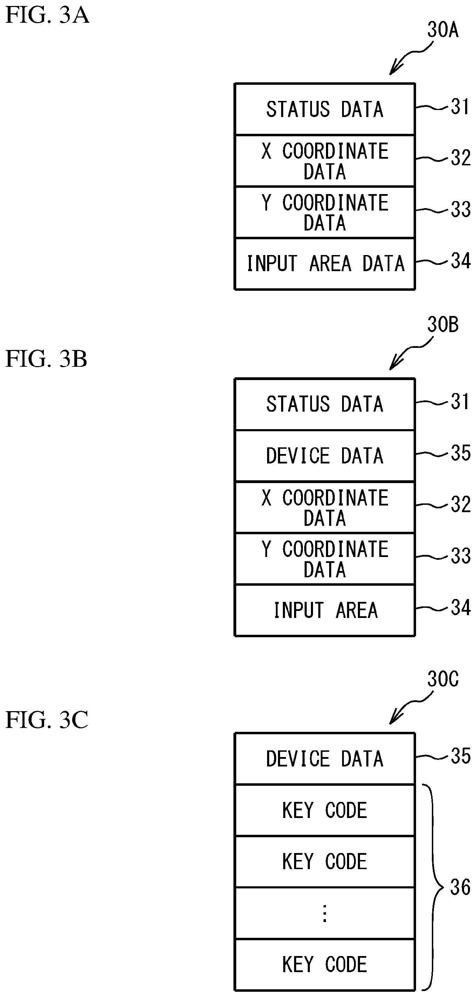

FIGs. 3A to 3C are diagrams illustrating examples of data structures.

In the present embodiment, since the structure of the data output from the touch panel controller 3 differs between the case where the touch panel driver 7 executes the data conversion and the case where the touch panel controller 3 executes the data conversion, the case where the touch panel driver 7 executes the data conversion will be described first.

### [Data Conversion by Touch Panel Driver 7]

FIG. 3A illustrates the data structure of data output by the touch panel controller 3 when the touch panel driver 7 executes data conversion. FIG. 3B illustrates the data structure of data output by the touch panel driver 7 when the operation mode of the touch panel 4 is switched to a tablet mode or a mouse mode. FIG. 3C illustrates the data structure of data output by the touch panel driver 7 when the operation mode of the touch panel 4 is switched to a keyboard mode.

Data 30A in FIG. 3A includes status data 31 indicating on/off of the touch input, X coordinate data 32 and Y coordinate data 33 indicating a position of the touch input, and input area data 34 indicating an input area of the touch input. The data 30A functions as first data.

The data 30B in FIG. 3B includes status data 31, X coordinate data 32, Y coordinate data 33, input area data 34, and device data 35 indicating whether the operation mode of the touch panel 4 is the absolute coordinate input device (for example, a tablet) or the relative coordinate input device (for example, a mouse). When the device data 35 indicates the absolute coordinate input device (e.g., the tablet), the data 30B functions as second data, and when the device data 35 indicates the relative coordinate input device (e.g., the mouse), the data 30B functions as third data. The absolute coordinate input device is a device that directly outputs data indicating a designated position (i.e., a pressed position) on the screen of the touch panel 4 to a computer or the like, and the relative coordinate input device is a device that outputs data indicating a movement amount from a current cursor position to a computer or the like.

The data 30C in FIG. 3C includes device data 35 indicating that the operation mode of the touch panel 4 is a keyboard, and a key code 36 of 8 bits.

When the input area data 34 in the data 30A of FIG. 3A is equal to or larger than a predetermined threshold value, the touch panel driver 7 sets a value indicating that the operation mode of the touch panel 4 is a mode of the absolute coordinate input device as the device data 35, converts the data 30A of FIG. 3A into the data 30B of FIG. 3B, and outputs the data 30B to the application 6.

If the input area data 34 of the data 30A in FIG. 3A is less than the predetermined threshold, the touch panel driver 7 sets a value indicating that the operation mode of the touch panel 4 is a mode of the relative coordinate input device (for example, the mouse) as the device data 35, sets the status data 31 to OFF, converts the data 30A of FIG. 3A to the data 30B of FIG. 3B, and outputs the data 30B to the application 6.

Alternatively, when the input area data 34 in the data 30A of FIG. 3A is less than the predetermined threshold value, the touch panel driver 7 sets a value indicating that the operation mode of the touch panel 4 is a mode of the keyboard operating as the relative coordinate input device as the device data 35, converts the data 30A of FIG. 3A to the data 30C of FIG. 3C, and outputs the data 30C to the application 6.

Next, a case where the touch panel controller 3 executes data conversion will be described.

### [Data Conversion by Touch Panel Controller 3]

FIG. 3A illustrates the data structure of data generated internally by the touch panel controller 3 when the touch panel controller 3 executes data conversion. FIG. 3B illustrates the data structure of data output by the touch panel controller 3 when the operation mode of the touch panel 4 is switched to the tablet mode or the mouse mode. FIG. 3C illustrates the data structure of data output by the touch panel controller 3 when the operation mode of the touch panel 4 is switched to the keyboard mode.

The data structures of the data 30A of FIG. 3A, the data 30B of FIG. 3B, and the data 30C of FIG. 3C are the same as the data structures of the data 30A, the data 30B, and the data 30C in the case of the data conversion by the touch panel driver 7, and therefore, the description thereof will be omitted.

When the input area data 34 in the data 30A of FIG. 3A is equal to or greater than the predetermined threshold value, the touch panel controller 3 sets, a value indicating that the operation mode of the touch panel 4 is the mode of the absolute coordinate input device as the device data 35, converts the data 30A of FIG. 3A into the data 30B of FIG. 3B, and outputs the data 30B to the application 6 via the touch panel driver 7 and the I/F driver 8.

When the input area data 34 in the data 30A of FIG. 3A is less than the predetermined threshold value, the touch panel controller 3 sets a value indicating that the operation mode of the touch panel 4 is the mode of the relative coordinate input device (for example, the mouse) as the device data 35, sets the status data 31 to OFF, converts the data 30A of FIG. 3A into the data 30B of FIG. 3B, and outputs the data 30B to the application 6 via the touch panel driver 7 and the I/F driver 8.

Alternatively, when the input area data 34 in the data 30A of FIG. 3A is less than the predetermined threshold value, the touch panel driver 7 sets a value indicating that the operation mode of the touch panel 4 is the mode of the keyboard operating as the relative coordinate input device as the device data 35, converts the data 30A of FIG. 3A into the data 30C of FIG. 3C, and outputs the data 30C to the application 6 via the touch panel driver 7 and the I/F driver 8.

### [Data Conversion Process by Touch Panel Driver 7]

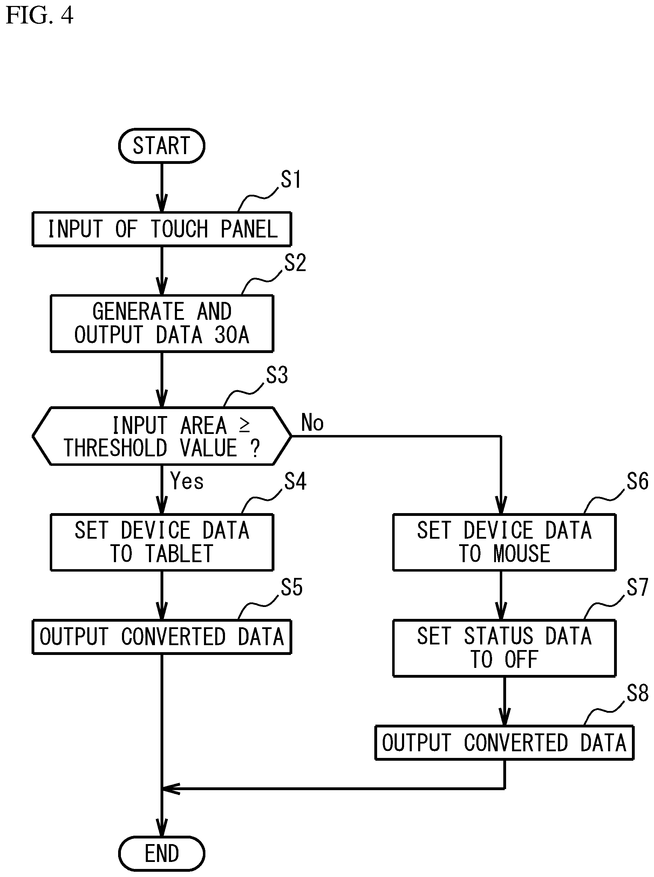

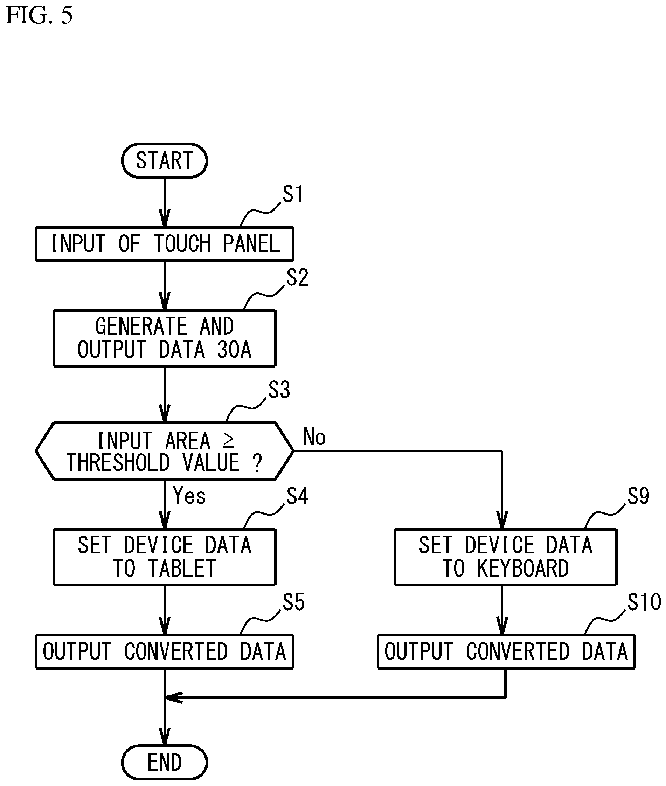

FIGs. 4 and 5 are flowcharts illustrating the data conversion process by the touch panel driver 7. FIG. 4 illustrates an example of switching the operation mode of the touch panel 4 to the tablet mode or the mouse mode, and FIG. 5 illustrates an example of switching the operation mode of the touch panel 4 to the tablet mode or the keyboard mode.

In FIG. 4, when touch input is performed on the touch panel 4 (S1), the touch panel controller 3 generates the data 30A of FIG. 3A based on the touch input of the touch panel 4, and outputs the data 30A to the touch panel driver 7 via the I/F driver 8 (S2). At this time, the touch panel driver 7 functions as an acquirer that acquires the data 30A from the touch panel controller 3 based on the touch input of the touch panel 4.

The touch panel driver 7 determines whether the input area data 34 of the data 30A illustrated in FIG. 3A is equal to or larger than the predetermined threshold value (S3).

When the input area data 34 is equal to or larger than the predetermined threshold value (YES in S3), the touch panel driver 7 converts the data 30A of FIG. 3A into the data 30B of FIG. 3B, and sets a value indicating the tablet mode (i.e., the mode of the absolute coordinate input device) in the device data 35 of the data 30B (S4). At this time, the status data 31, the X coordinate data 32, the Y coordinate data 33, and the input area data 34 of the data 30B are the same as the status data 31, the X coordinate data 32, the Y coordinate data 33, and the input area data 34 of the data 30A.

The touch panel driver 7 outputs the converted data 30B to the application 6 (S5), and ends the process.

If the input area data 34 is less than a predetermined threshold (NO in S3), the touch panel driver 7 converts the data 30A of FIG. 3A into the data 30B of FIG. 3B, sets a value indicating the mouse mode (i.e., the mode of the relative coordinate input device) in the device data 35 of the data 30B (S6), and sets the status data 31 of the data 30B to OFF (S7). At this time, the X coordinate data 32, the Y coordinate data 33, and the input area data 34 of the data 30B are the same as the X coordinate data 32, the Y coordinate data 33, and the input area data 34 of the data 30A.

The touch panel driver 7 outputs the converted data 30B to the application 6 (S8), and ends the process.

According to the present process, the touch panel driver 7 switches the operation mode of the touch panel 4 according to the input area of the touch input. When the data 30B is output as the mouse mode, the operation of the cursor movement that cannot be executed in the tablet mode can be realized by setting the status data 31 to OFF.

Since the touch panel driver 7 changes the data output to the application 6 in accordance with the input area of the touch input, the user can determine the input position in the tablet mode by performing the touch input with the finger while moving the cursor in the mouse mode by performing the touch input with the toe of the nail. That is, according to the present process, the user can continuously realize a movement process of the cursor and a determination process of the input position without performing an operation of switching the operation mode of the touch panel 4.

In FIG. 5, only a process different from that in FIG. 4 will be described.

In FIG. 5, when the input area data 34 is less than the predetermined threshold (NO in S3), the touch panel driver 7 converts the data 30A of FIG. 3A into the data 30C of FIG. 3C, and sets a value indicating the keyboard mode to be operated as the relative coordinate input device in the device data 35 of the data 30C (S9). At this time, the key code 36 of the data 30C is generated based on, for example, the status data 31, the X coordinate data 32, and the Y coordinate data 33 of the data 30A, and a conversion rule associated with these data and the key code. The conversion rule is stored in advance in the memory 12 or the large capacity storage medium 13.

The touch panel driver 7 outputs the converted data 30C to the application 6 (S10), and ends the process.

According to the present process, since the touch panel driver 7 changes the data output to the application 6 in accordance with the input area of the touch input, the user can determine the key selection as the tablet mode by performing the touch input with the finger while changing a key of the input candidate as the keyboard mode by performing the touch input with the toe of the nail. That is, according to the present process, the user can continuously realize a change process of the key of the input candidate and a determination process of the key selection without performing the operation of switching the operation mode of the touch panel 4.

### [Process of Data Conversion by Touch Panel Controller 3]

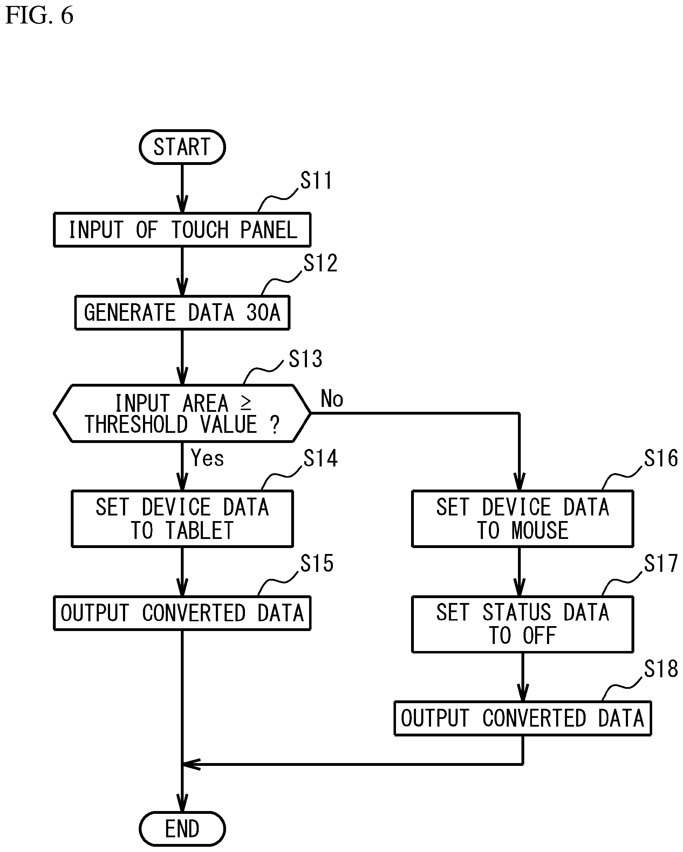

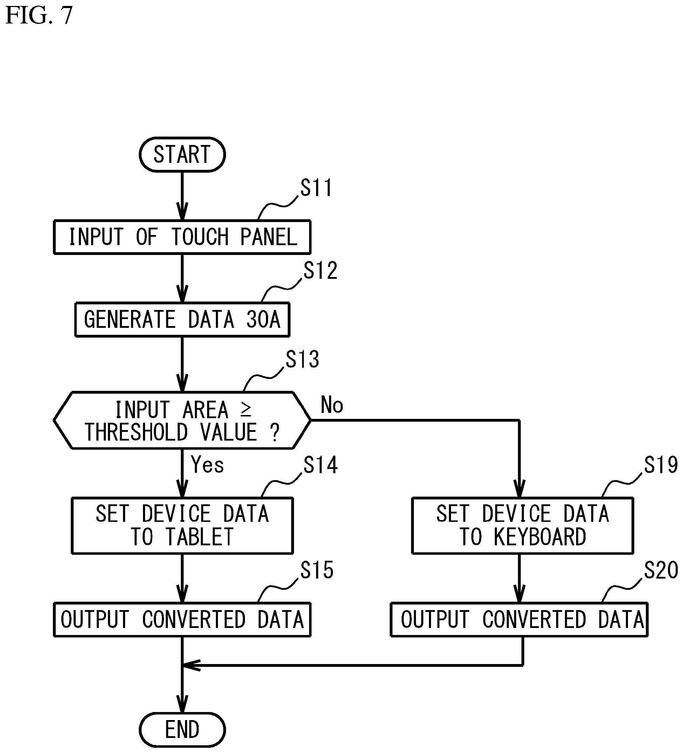

FIGs. 6 and 7 are flowcharts illustrating a process of the data conversion by the touch panel controller 3. FIG. 6 illustrates an example of switching the operation mode of the touch panel 4 to the tablet mode or the mouse mode, and FIG. 7 illustrates an example of switching the operation mode of the touch panel 4 to the tablet mode or the keyboard mode.

In FIG. 6, when the touch input is performed on the touch panel 4 (S11), the touch panel controller 3 generates the data 30A of FIG. 3A based on the touch input of the touch panel 4 (S12). At this time, the touch panel controller 3 functions as an acquirer for acquiring the data 30A based on the touch input of the touch panel 4.

The touch panel controller 3 determines whether the input area data 34 of the data 30A illustrated in FIG. 3A is equal to or larger than a predetermined threshold value (S13).

When the input area data 34 is equal to or larger than the predetermined threshold value (YES in S13), the touch panel controller 3 converts the data 30A of FIG. 3A into the data 30B of FIG. 3B, and sets a value indicating the tablet mode (the mode of the absolute coordinate input device) in the device data 35 of the data 30B (S14). At this time, the status data 31, the X coordinate data 32, the Y coordinate data 33, and the input area data 34 of the data 30B are identical to the status data 31, the X coordinate data 32, the Y coordinate data 33, and the input area data 34 of the data 30A.

The touch panel controller 3 outputs the converted data 30B to the application 6 via the touch panel driver 7 and the I/F driver 8 (S15), and ends the process.

When the input area data 34 is less than a predetermined threshold (NO in S13), the touch panel controller 3 converts the data 30A of FIG. 3A into the data 30B of FIG. 3 B, sets a value indicating a mouse mode (the mode of the relative coordinate input device) in the device data 35 of the data 30B (S16), and sets the status data 31 of the data 30B to OFF (S17). At this time, the X coordinate data 32, the Y coordinate data 33, and the input area data 34 of the data 30B are identical to the X coordinate data 32, the Y coordinate data 33, and the input area data 34 of the data 30A.

The touch panel controller 3 outputs the converted data 30B to the application 6 via the touch panel driver 7 and the I/F driver 8 (S18), and ends the process.

According to the present process, the touch panel controller 3 switches the operation mode of the touch panel 4 in accordance with the input area of the touch input. When the data 30B is output as the mouse mode, the operation of the cursor movement that cannot be executed in the tablet mode can be realized by setting the status data 31 to OFF.

Since the touch panel controller 3 changes the data output to the application 6 in accordance with the input area of the touch input, the user can determine the input position in the tablet mode by performing the touch input with the finger while moving the cursor in the mouse mode by performing the touch input with the toe of the nail. That is, according to the present process, the user can continuously realize the process of the cursor movement and the determination process of the input position without performing an operation of switching the operation mode of the touch panel 4.

In FIG. 7, only the process different from that in FIG. 6 will be described.

In FIG. 7, when the input area data 34 is less than a predetermined threshold (NO in S13), the touch panel controller 3 converts the data 30A of FIG. 3A into the data 30C of FIG. 3C, and sets a value indicating the keyboard mode to be operated as the relative coordinate input device in the device data 35 of the data 30C (S19). At this time, the key code 36 of the data 30C is generated based on, for example, the status data 31, the X coordinate data 32, and the Y coordinate data 33 of the data 30A, and the conversion rule associated with these data and the key code. The conversion rule is stored in advance in the memory 12 or the large capacity storage medium 13.

The touch panel controller 3 outputs the converted data 30C to the application 6 via the touch panel driver 7 and the I/F driver 8 (S20), and ends the process.

According to the present process, since the touch panel controller 3 changes the data output to the application 6 in accordance with the input area of the touch input, the user can determine the key selection as the tablet mode by performing the touch input with the finger while changing the key of the input candidate as the keyboard mode by performing the touch input with the toe of the nail. That is, according to the present process, the user can continuously realize the change process of the key of the input candidate and the determination process of the key selection without performing the operation of switching the operation mode of the touch panel 4.

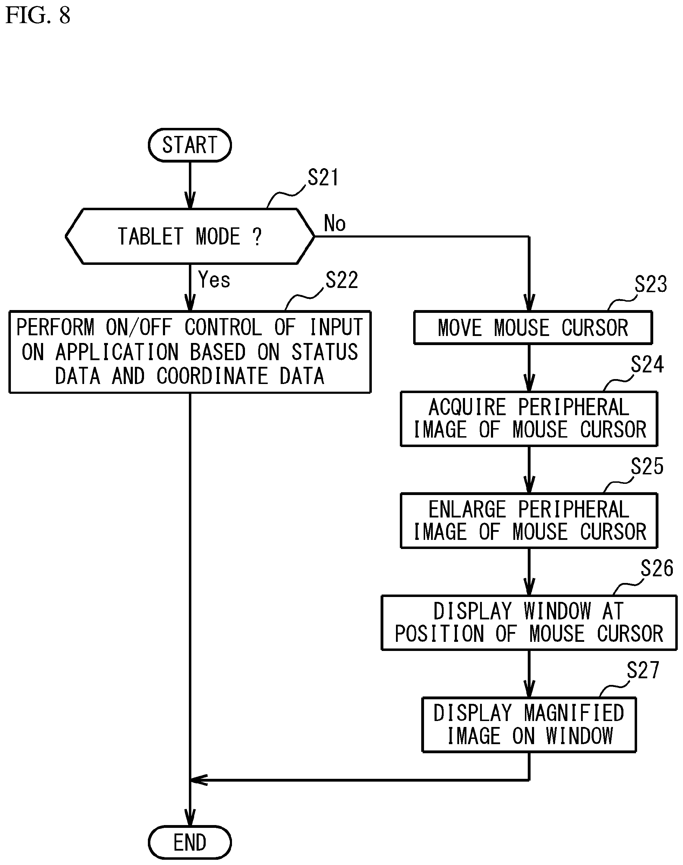

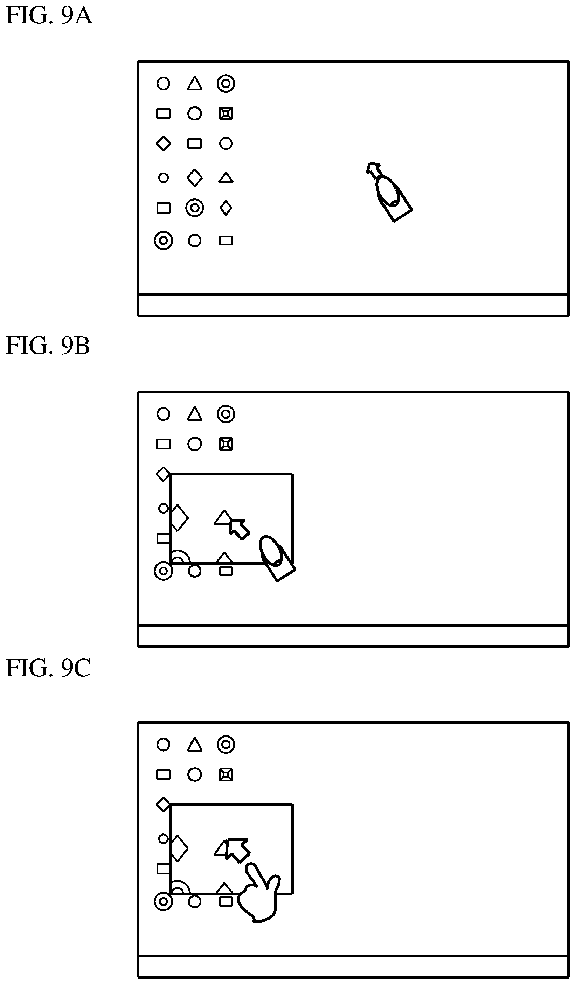

FIG. 8 is a flowchart illustrating an example of the process of the CPU 11 executing the application 6. FIGs. 9A to 9C are diagrams illustrating examples of an operation screen of the application 6. In this example, the application 6 is a magnifying glass application.

First, the CPU 11 determines whether a value indicating the tablet mode is set in the device data 35 of the data 30B received by the application 6 (S21).

If a value indicating the tablet mode is set in the device data 35 (YES in S21), the CPU 11 performs on/off control of an input on the application 6 based on the status data 31, the X coordinate data 32, and the Y coordinate data 33 included in the received data 30B (S22), and ends the process.

On the other hand, when the value indicating the tablet mode is not set in the device data 35, that is, when the value indicating the mouse mode is set in the device data 35 (NO in S21), the CPU 11 moves a mouse cursor on the application 6 based on the X coordinate data 32 and the Y coordinate data 33 included in the received data 30B (S23). For example, as illustrated in FIG. 9A, the user moves the mouse cursor (arrow) with the tip of the nail.

The CPU 11 acquires a peripheral image of the mouse cursor based on the X coordinate data 32 and the Y coordinate data 33 included in the received data 30B (S24). The peripheral image of the mouse cursor is an image of a certain range including the mouse cursor. The CPU 11 enlarges the peripheral image of the mouse cursor (S25), and displays a window for a magnifying glass at the position of the mouse cursor (S26). The CPU 11 displays the magnified image of S25 in the window for the magnifying glass (S27), and ends the process. For example, as illustrated in FIG. 9B, when the user moves the mouse cursor (arrow) with the tip of the nail, the window for the magnifying glass including the enlarged peripheral image of the mouse cursor is displayed on the application 6.

Thereafter, as illustrated in FIG. 9C, when the user presses an icon with the finger pad, the value indicating the tablet mode is set in the device data 35 of the data 30B received by the application 6 (YES in S21), and therefore the CPU 11 executes ON of the input on the application 6 (i.e., selection of the icon in FIG. 9C) based on the status data 31, the X coordinate data 32, and the Y coordinate data 33 included in the received data 30B (S22).

The application of the magnifying glass is only an example of the application 6, and various applications can be adopted as the application 6.

For example, an application that allows an input of an area larger than the input area actually touch-input may be adopted as the application 6. In this case, the application 6 increases the input area to be larger than the input area of the input area data 34 of the data 30B. Thus, the application 6 can provide the user with a function of making it easy to select an icon in the case where the icon is small and difficult to select or in the case where the input of a visually impaired person is assisted.

For example, an application in which the sound of the selected content is output from the sound input/output unit 15 only when the icon is selected may be adopted as the application 6. This allows a visually impaired person to check whether an icon has been selected.

For example, an application that invalidates the input area data 34 of the data 30B when the input area actually touch-inputted is larger than a predetermined area may be adopted as the application 6.

For example, an application may be adopted as the application 6, in which the input area by the adult's finger and the input area by the child's finger are divided, and the input by the child's finger is prohibited.

For example, an application in which input control proportional to the input area of a finger is performed may be adopted as the application 6. For example, the thickness of the input may be determined according to the input area, such as the Japanese calligraphy of Tome, Hane, and Harai.

As described above, the touch panel driver 7 or the touch panel controller 3 acquires the data 30A based on the touch input of the touch panel 4 (S2 in FIG. 4 or S 12 in FIG. 6), determines whether the input area of the touch input is equal to or larger than the threshold value (S3 in FIG. 4 or S 13 in FIG. 6). If the input area is equal to or larger than the threshold value, the touch panel driver 7 or the touch panel controller 3 converts the data 30A into the data 30B including the device data 35 for operating the touch panel 4 as the tablet (i.e., absolute coordinate input device) and outputs the data 30B to the application 6, and if the input area is smaller than the threshold value, the touch panel driver 7 or the touch panel controller 3 converts the data 30A into the data 30B including the device data 35 for operating the touch panel 4 as the mouse (i.e., relative coordinate input device) and outputs the data 30B to the application 6 (S5 in FIG. 4, S15 in FIG. 6, S8 in FIG. 4, S18 in FIG. 6).

Thus, since the data 30B output to the application 6 is changed in accordance with the input area, the user can determine the input position as the tablet by performing touch input with a finger while moving the cursor as the mouse by performing touch input with the tip of the nail. That is, the user can continuously perform the cursor movement process and the input position determination process without performing an operation of switching the operation mode of the touch panel 4.

Since the data 30B includes the device data 35 indicating whether the operation mode of the touch panel 4 is the absolute coordinate input device or the relative coordinate input device, it is possible to notify the application 6 of whether the operation mode of the touch panel 4 is the absolute coordinate input device or the relative coordinate input device.

When the touch panel 4 is operated as the mouse, the touch panel driver 7 or the touch panel controller 3 sets the status data 31 included in the data 30B to the status data indicating that the touch input is off, so that the operation of only moving the cursor of the mouse can be realized.

The process executed by the touch panel driver 7 or the touch panel controller 3 may be realized by executing the program by either the touch panel controller 3 connected to the touch panel 4 or the computer 2 connected to the touch panel controller 3. In this case, the program is firmware incorporated in the touch panel controller or a touch panel driver incorporated in the computer 2.

Since the application 6 executes the process of determining the input position based on the data 30B including the device data 35 for operating the touch panel 4 as the tablet and executes the process of moving the cursor indicating the input position based on the data 30B including the device data 35 for operating the touch panel 4 as the mouse, the user can determine the input position as the tablet by performing touch input with the finger pad while moving the cursor as the mouse by performing touch input with the tip of the nail. That is, the user can continuously perform the cursor movement process and the input position determination process without performing the operation of switching the operation mode of the touch panel 4.

Further, the application 6 displays the enlarged image obtained by enlarging the region around the cursor including the cursor during the execution of the input position determination process and the cursor movement process, so that the function of a so-called magnifying glass can be provided to the user. The user can confirm small characters, small icons, and the like by enlarging them.

Although the embodiment of the present invention is described in detail, the present invention is not limited to the specifically described embodiments and variations but other embodiments and variations may be made without departing from the scope of the claimed invention.

## Claims

1. A program causing a computer (2, 3) connected to a resistive touch panel (4) to execute a process, the process **characterized by** comprising:
acquiring first data based on touch input of the touch panel;
determining whether an input area of the touch input is equal to or larger than a threshold;
converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value; and
outputting the second data or the third data to an application.

2. The program according to claim 1, wherein
the first data includes status data indicating on or off of the touch input, coordinate data indicating a position of the touch input, and input area data indicating an input area, and
each of the second data and the third data includes the status data, the coordinate data, the input area data, and device data indicating whether an operation mode of the touch panel is the absolute coordinate input device or the relative coordinate input device.

3. The program according to claim 2, wherein
the converting sets the status data included in the third data to data indicating that the touch input is off.

4. The program according to any preceding claim, wherein
the program is executed by either a touch panel controller (3) connected to the touch panel or an information processing apparatus (2) connected to the touch panel controller.

5. The program according to claim 1, wherein
the first data includes status data indicating on or off of the touch input, coordinate data indicating a position of the touch input, and input area data indicating an input area,
the second data includes the status data, the coordinate data, the input area data, and first device data indicating that an operation mode of the touch panel is the absolute coordinate input device, and
the third data includes second device data indicating that an operation mode of the touch panel is the relative coordinate input device, and key code data indicating a key of a keyboard.

6. The program according to any preceding claim, wherein
the touch input is performed by a member whose input area is variable.

7. A touch panel controller (3) connected to a resistive touch panel (4), **characterized by** comprising:
an acquisition unit (21) configured to acquire first data based on touch input of the touch panel;
a determination unit (21) configured to determine whether an input area of the touch input is equal to or larger than a threshold;
a conversion unit (21) configured to convert the first data into second data for causing the touch panel to operate as an absolute coordinate input device when the input area is equal to or larger than the threshold value, and to convert the first data into third data for causing the touch panel to operate as a relative coordinate input device when the input area is smaller than the threshold value; and
an output unit (21) configured to output the second data or the third data to an application (6).

8. An information processing apparatus (2) connected to a resistive touch panel (4), **characterized by** comprising:
an acquisition unit (7, 11) configured to acquire first data based on touch input of the touch panel;
a determination unit (7, 11) configured to determine whether an input area of the touch input is equal to or larger than a threshold;
a conversion unit (7, 11) configured to convert the first data into second data for causing the touch panel to operate as an absolute coordinate input device when the input area is equal to or larger than the threshold value, and to convert the first data into third data for causing the touch panel to operate as a relative coordinate input device when the input area is smaller than the threshold value; and
an output unit (7, 11) configured to output the second data or the third data to an application (6).

9. The information processing apparatus according to claim 8, wherein
the application receives the second data or the third data, executes a process for determining an input position based on the second data, and executes a process for moving a cursor indicating the input position based on the third data.

10. The information processing apparatus according to claim 9, wherein
the application displays an enlarged image obtained by enlarging a region around the cursor including the cursor during execution of the process for determining the input position and the process for moving the cursor.

11. A method of controlling a resistive touch panel, **characterized by** comprising:
acquiring first data based on touch input of the touch panel;
determining whether an input area of the touch input is equal to or larger than a threshold;
converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value; and
outputting the second data or the third data to an application.

## Amended claims

### Amended claims in accordance with Rule 137(2) EPC.

1. A program causing a computer (2, 3) connected to a resistive touch panel (4) to execute a process, the process **characterized by** comprising:
acquiring first data based on touch input of the touch panel;
determining whether an input area of the touch input is equal to or larger than a threshold;
converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value; and
outputting the second data or the third data to an application, wherein
when data output to the application changes from the third data to the second data, the application continuously executes a process of moving a cursor indicating an input position based on the third data and a process of determining the input position based on the second data.

2. The program according to claim 1, wherein
the first data includes status data indicating on or off of the touch input, coordinate data indicating a position of the touch input, and input area data indicating an input area, and
each of the second data and the third data includes the status data, the coordinate data, the input area data, and device data indicating whether an operation mode of the touch panel is the absolute coordinate input device or the relative coordinate input device.

3. The program according to claim 2, wherein
the converting sets the status data included in the third data to data indicating that the touch input is off.

4. The program according to any preceding claim, wherein
the program is executed by either a touch panel controller (3) connected to the touch panel or an information processing apparatus (2) connected to the touch panel controller.

5. The program according to claim 1, wherein
the first data includes status data indicating on or off of the touch input, coordinate data indicating a position of the touch input, and input area data indicating an input area,
the second data includes the status data, the coordinate data, the input area data, and first device data indicating that an operation mode of the touch panel is the absolute coordinate input device, and
the third data includes second device data indicating that an operation mode of the touch panel is the relative coordinate input device, and key code data indicating a key of a keyboard.

6. The program according to any preceding claim, wherein
the touch input is performed by a member whose input area is variable.

7. A touch panel controller (3) connected to a resistive touch panel (4), **characterized by** comprising:
an acquisition unit (21) configured to acquire first data based on touch input of the touch panel;
a determination unit (21) configured to determine whether an input area of the touch input is equal to or larger than a threshold;
a conversion unit (21) configured to convert the first data into second data for causing the touch panel to operate as an absolute coordinate input device when the input area is equal to or larger than the threshold value, and to convert the first data into third data for causing the touch panel to operate as a relative coordinate input device when the input area is smaller than the threshold value; and
an output unit (21) configured to output the second data or the third data to an application (6), wherein
when data output to the application changes from the third data to the second data, the application is configured to continuously execute a process of moving a cursor indicating an input position based on the third data and a process of determining the input position based on the second data.

8. An information processing apparatus (2) comprising the touch panel controller (3) of claim 7.

9. The information processing apparatus according to claim 8, wherein
the application displays an enlarged image obtained by enlarging a region around the cursor including the cursor during execution of the process for determining the input position and the process for moving the cursor.

10. A method of controlling a resistive touch panel, **characterized by** comprising:
acquiring first data based on touch input of the touch panel;
determining whether an input area of the touch input is equal to or larger than a threshold;
converting the first data into second data for causing the touch panel to operate as an absolute coordinate input device when the input area is equal to or larger than the threshold value, and converting the first data into third data for causing the touch panel to operate as a relative coordinate input device when the input area is smaller than the threshold value; and
outputting the second data or the third data to an application, wherein
when data output to the application changes from the third data to the second data, the application continuously executes a process of moving a cursor indicating an input position based on the third data and a process of determining the input position based on the second data.
